(19) Europäisches Patentamt
European Patent Office
Office européen des brevets

(11) **EP 1 166 487 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **00915130.9**

(22) Anmeldetag: **01.03.2000**

(51) Int Cl.:
**H04L 1/20** *(2006.01)*    **H04B 10/08** *(2006.01)*

(86) Internationale Anmeldenummer:
**PCT/DE2000/000608**

(87) Internationale Veröffentlichungsnummer:
**WO 2000/060800 (12.10.2000 Gazette 2000/41)**

(54) **VERFAHREN UND ANORDNUNG ZUR MESSUNG DER SIGNALQUALITÄT IN EINEM OPTISCHEN ÜBERTRAGUNGSSYSTEM**

METHOD AND ARRANGEMENT FOR MEASURING THE SIGNAL QUALITY IN AN OPTICAL TRANSMISSION SYSTEM

PROCEDE ET DISPOSITIF DE MESURE DE LA QUALITE D'UN SIGNAL DANS UN SYSTEME DE TRANSMISSION OPTIQUE

(84) Benannte Vertragsstaaten:
**DE FR GB IT**

(30) Priorität: **31.03.1999 DE 19914793**

(43) Veröffentlichungstag der Anmeldung:
**02.01.2002 Patentblatt 2002/01**

(73) Patentinhaber: **SIEMENS AKTIENGESELLSCHAFT 80333 München (DE)**

(72) Erfinder:
• **WIESMANN, Rainer D-82269 Geltendorf (DE)**
• **GLINGENER, Christoph D-83620 Feldkirchen-Westerham (DE)**
• **BLECK, Oliver D-80639 München (DE)**
• **HEPPNER, Björn D-81477 München (DE)**
• **MÜLLNER, Ernst D-80992 München (DE)**
• **NEUDECKER, Albrecht D-81369 München (DE)**

(56) Entgegenhaltungen:
**DE-A- 19 717 643        US-A- 5 585 954**

• **TAKESHITA H ET AL: "A novel data format free bit-by-bit quasi-error monitoring method for optical transport network" OFC/IOOC'99. OPTICAL FIBER COMMUNICATION CONFERENCE AND THE INTERNATIONAL CONFERENCE ON INTEGRATED OPTICS AND OPTICAL FIBER COMMUNICATIONS (CAT. NO. 99CH36322), OFC/IOOC'99. OPTICAL FIBER COMMUNICATION CONFERENCE AND THE INTERNATIONAL CONFERENCE ON IN, Seiten 149-151 vol.4, XP002142816 1999, Piscataway, NJ, USA, IEEE, USA in der Anmeldung erwähnt**

**Beschreibung**

Die Erfindung betrifft Verfahren zur Messung von Verteilungsfunktionen zum Ermitteln der Signalqualität in einem optischen Übertragungssystemen. Eine geeignete Anordnung ermöglicht die Messung der statistischen Eigenschaften und der wesentlichen Signalparameter. Die Meßergebnisse können zur Verbesserung der Signalqualität, beispielsweise zur Optimierung der Dispersionskompensation verwendet werden.

Aufgrund der Messungen von Verteilungsfunktionen können aufgrund von statistischen Auswertungen Aussagen über die Qualität eines empfangenen Binärsignals und damit auch der Eigenschaften des Übertragungssystems und der Übertragungsstrecke gemacht werden. Diese Aussagen können wiederum zur Optimierung des Systems, beispielsweise zur Einstellung eines optimalen Abtastzeitpunktes, einer optimalen Abtastschwelle oder zur Dispersionskompensation, verwendet werden.

Aus der deutschen Offenlegungsschrift DE 195 04 896 A1 ist eine Überwachung der Signalqualität transparenter optischer Netze bekannt, bei der eine stichprobenartige Abtastung eines Signals vorgenommen wird. Die so gewonnenen Amplituden-Stichproben werden mittels eines bekannten statistischen Verfahrens ausgewertet. In einer älteren Patentanmeldung Aktenzeichen ... DE 198 17 078.8 wird dieses Verfahren weiterentwickelt, in dem nur die äußeren Flanken einer aus den Meßergebnissen abgeleiteten Wahrscheinlichkeitsdichtefunktion ausgewertet werden. So kann beispielsweise die Bitfehlerrate abgeschätzt werden. Das hier beschriebene Verfahren setzt jedoch sehr schnelle Abtast- und Speichermöglichkeiten voraus.

In dem US-Patent 5,585,954 ist eine Anordnung zur Messung der Fehlerrate bei unterschiedlichen Entscheider-Schwellwerten anhand einer vorbestimmten Pseudo-Random-Folge beschrieben, die zur Ermittlung der Übertragungscharakteristik verwendet werden. Hierzu muß jedoch die Datenübertragung unterbrochen werden. Die gemessene Bitfehlerrate ist nur bedingt zur Feststellung nichtlinearer Effekte geeignet.

In einem Aufsatz von Hitoshi Takashita und Naoya Henmi Optical Fiber Communication Conference (OFC) 99, San Diego. California, FJ 2-1, p.149 - 151 wird in einem Artikel "A novel data format free bit-by-bit quasi-error monitoring method for optical transport network" eine Empfangsschaltung mit zwei Abtastschaltungen verwendet, die unterschiedliche Schwellen aufweisen. Durch Abtastung des Binärsignals mit zwei verschiedenen Schellen wird eine Quasi-Bitfehlerrate gemessen und ein direkter Zusammenhang mit der Bitfehlerrate festgestellt. Weitere statistische Aussagen werden nicht gemacht.

Aufgabe der Erfindung ist es, Messverfahren anzugeben, mit denen statistisch auswertbare Verteilungsfunktionen ermittelt werden können.

In weiteren Teilaufgaben sind die Anwendung zur Verbesserung der Signalqualität, beispielsweise durch Optimierung der Dispersionskompensation, und eine geeignete Meßanordnung anzugeben.

Ausgehend vom vorstehend beschriebenen Artikel "A novel data format free bit-by-bit quasi-error monitoring method for optical transport network" wird die Hauptaufgabe gemäß den in den unabhängigen Patentansprüchen 1 und 2 angegebenen Verfahren und der im unabhängigen Anspruch 13 angegebene Anordnung gelöst.

Vorteilhaft bei dem Verfahren nach Anspruch 1 ist, daß durch Variieren der Schwelle eines zweiten Entscheiders von Meßintervall zu Meßintervall und durch Vergleich der abgetasteten Daten eine Wahrscheinlichkeitsverteilung gemessen wird, aus der die Verteilungsdichtefunktion für das Auftreten bestimmter Empfangspegel zu den Abtastzeitpunkten - die Abtastwerte - ermittelt werden können. Vorteilhaft ist eine sich an die Abtastung anschließende Integration der binären Entscheidungen, so daß nur eine einfache und langsame Verarbeitung erforderlich ist.

Eine besonders vorteilhafte Ausbildung der Erfindung verzichtet auf den Vergleich der mit unterschiedlichen Schwellen abgetasteten Bits und zählt (integriert) jeweils innerhalb eines Meßintervalls die bei einer bestimmten Schwelle als logische Eins (oder als logische Null) bewerteten Bits sowie die Anzahl der Bits. Bei ungleichgewichtigen Codierungen kann die Anzahl der logischen Einsen (oder logischen Nullen) im Arbeitskanal mitbewertet werden, um bei unterschiedlichen Verteilungen der Binärzustände Schwankungen zu vermeiden. Aus einer Vielzahl von Messungen mit unterschiedlichen Abtastschwellen wird wieder die Wahrscheinlichkeitsfunktion ermittelt.

Durch die Verwendung von mehreren Meßkanälen mit unterschiedlichen Abtastschwellen kann die Meßzeit erheblich reduziert werden.

Aufgrund der gemessenen Verteilungskurven kann auf die Qualität des empfangenen Binärsignals und damit die Eigenschaften des optischen Übertragungssystems geschlossen werden. Die gewonnenen Erkenntnisse können zur Optimierung des Systems, beispielsweise der Abtastung sowie der Dispersionskompensation, verwendet werden.

Eine geeignete Meßeinrichtung kann im Zeitmultiplex-Betrieb sowohl die wesentlichen Signalparameter wie Wellenlänge, Leistung, Signal-Rausch-Abstand als auch statistische Messungen durchführen.

Die Erfindung wird anhand von Ausführungsbeispielen näher erläutert.

Es zeigen:

Figur 1     eine Meßeinrichtung zur Messung der Wahrscheinlichkeitsverteilung,

Figur 2     eine Wahrscheinlichkeitsdichteverteilung in Abhängigkeit von unterschiedlichen Schwellwerten,

Figur 3     eine mit einer Schaltung nach Figur 1 gemessene Wahrscheinlichkeitsverteilung,

Figur 4    eine weitere Meßeinrichtung zur Messung der Wahrscheinlichkeitsverteilung,

Figur 5    eine ideale Wahrscheinlichkeitsdichteverteilung,

Figur 6    eine gemessene Wahrscheinlichkeitsverteilung bei unterschiedlichen Schwellwerten,

Figur 7    eine hieraus abgeleitete Wahrscheinlichkeitsdichte,

Figur 8    eine Wahrscheinlichkeitsverteilung der binären Zustände,

Figur 9    die dazugehörige Verteilungsdichte,

Figur 10   eine Variante der weiteren Meßeinrichtung zur schnelleren Messung,

Figur 11   Wahrscheilichkeitsdichteverteilungen in Abhängigkeit von der Dispersion,

Figur 12   die Ermittlung der optimalen Dispersionskompensation und

Figur 13   eine Meßanordnung.

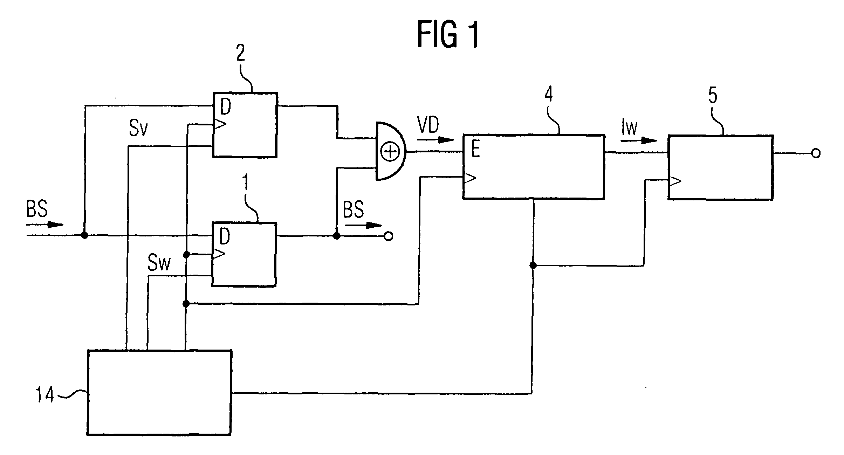

In **Figur 1** ist eine Meßeinrichtung zur Bewertung der Signalqualität dargestellt. Sie enthält eine erste Abtaststufe 1 im "Arbeitskanal", die zum Zeitpunkt der wirksamen Flanke des Taktsignals Cl mit einem ersten zumindest annähernd optimalen Schwellwert Sw (w - working channel) das im Basisband vorliegende elektrische Binärsignal BS abtastet. Der einstellbare Schwellwert Sw liegt zweckmäßigerweise etwa in der Mitte zwischen den beiden idealen Signalpegeln, die die logische Eins bzw. die logische Null repräsentieren. Parallel hierzu erfolgt gleichzeitig die Abtastung mittels einer zweiten Meß-Abtaststufe 2 in einem "Meßkanal", deren Schwellwert Sv (v - variabel) ebenfalls veränderlich ist. Die Ausgänge beider Abtaststufen sind über ein Exklusiv-ODER-Gatter 3 zusammengefaßt, das als Ausgangssignal einen Vergleichswert angibt, der bei ungleichen Abtastergebnissen logisch 1 ist. Innerhalb eines Meßintervalls werden die Vergleichswerte VD von einem (digitalen oder analogen) Integrator 4 aufsummiert. Der so ermittelte Vergleichssummenwert IW wird dann in einen Speicher 5 einer nicht dargestellten Auswerteeinheit mit einem Intervalltaktsignal TI eingeschrieben, der auch die Zähler zurücksetzt. Dieser Vorgang wird für beispielsweise 200 unterschiedliche Schwellwerte wiederholt, bis sich eine möglichst genaue Verteilungsfunktion zwischen dem kleinsten und dem größten möglichem Abtastwert bzw. Schwellwert ergibt.

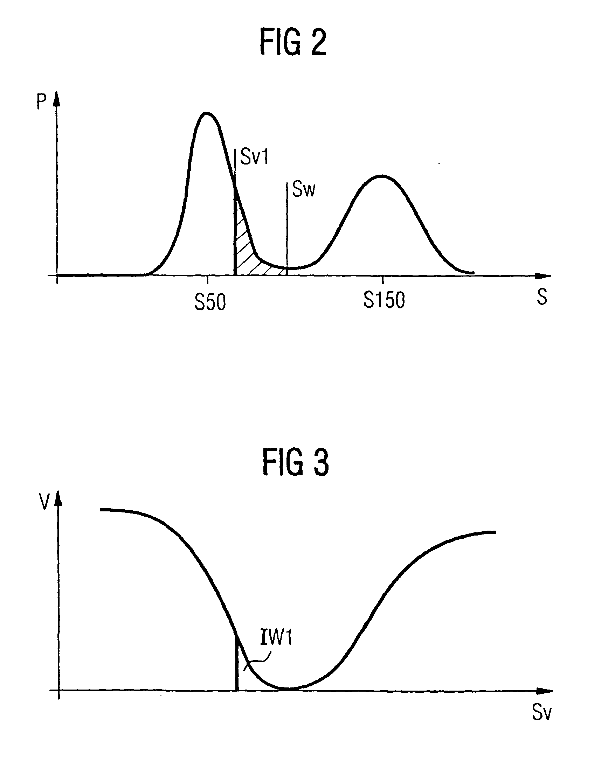

In **Figur 2** ist zum besseren Verständnis zunächst die Verteilungsdichte von Abtastwerten eines empfangenen Binärsignal dargestellt. Diese würde man - im Gegensatz zur Messung mit der Einrichtung nach Figur 1 - erhalten, wenn direkt die Amplituden der Abtastwerte gemessen würden. Die waagerechte Achse gibt die möglichen Amplituden der Abtastwerte Si an; auf der senkrechten Achse ist die Verteilungsdichte P(Si) für das Auftreten von Abtastwerten mit bestimmten Amplituden S dargestellt.

Für die Verteilungsdichte gilt $P(S) = \dfrac{\sum Si}{\sum Bits}$.

Bei einem eingezeichneten Amplitudenwert $S_{50}$ tritt ein erstes Maximum auf. Dieser Amplitudenwert entspricht etwa dem mittleren Wert für die logische Null. Mit zunehmenden Amplitudenwerten nimmt die Verteilungsdichte wieder ab, bis sie ein neues Maximum bei einem Amplitudenwert $S_{150}$ erreicht, der den mittleren Amplitudenwert für die logische Eins repräsentiert. Anschießend fällt die Funktion wieder ab.

Bei der mit einer Meßanordnung nach Figur 1 durchgeführte Messung werden aber, wie bereits beschrieben, nicht mehr die einzelnen Amplitudenwerte abgetastet und gespeichert, da dies sehr schnelle Schaltungen erfordern würde. Dagegen wird bewertet, ob die Abtastwerte in beiden Abtaststufen übereinstimmen oder nicht. Da gemäß Figur 1 die ungleichen Abtastwerte integriert werden, ergibt sich bei der in **Figur 3** ermittelten Verteilungsfunktion V(S) ein Minimum, wenn die Abtastschwellwerte Sw und Sv identisch sind. Wird jetzt der variable Schwellwert Sv verkleinert, so wird es mit zunehmender Differenz der Schwellwerte zu immer häufigeren Abweichungen kommen. Ein sehr niedriger variabler Schwellwert Sv der zweiten Entscheiderstufe 2 wird daher fast immer ein Überschreiten der Schwelle bewirken. Damit werden als Abtastwerte im Meßkanal logische Einsen überwiegen, obwohl als Bit eine logische Null empfangen wurde, deren Pegel jedoch oberhalb der Schwelle lag. Mit oberhalb des konstant gehaltenen Schwellwertes Sw liegenden und weiter zunehmenden Schwellwerten ergibt sich ebenfalls ein Anstieg der Verteilungsfunktion, da nunmehr die Abtaststufe des Meßkanals häufiger die logische Null abgibt, da der erforderliche Pegel von einer log. Eins des Binärsignals nicht erreicht wird.

Da bei der Meßeinrichtung nach Figur 1 stets alle oberhalb (bzw. unterhalb) des variablen Schwellwertes Sv1 liegenden Abtastwerte bewertet werden, entspricht die gemessene Verteilungsfunktion Figur 3 dem Integral der Verteilungsdichtefunktion nach Figur 2. Oder, anders ausgedrückt, Figur 2 ist der Betrag der Ableitung der in Figur 3 dargestellten Funktion. Als Beispiel ist ein Integrationswert IW1 für zwei bestimmte Schwellwerte Sw und Sv1 eingezeichnet.

Nur wenn die variable Schwelle in sehr feinen Stufen verändert wird, ergibt sich eine relativ genaue und daher glatte Verteilungskurve. Dies ist aber auch nur dann der Fall, wenn die Messungen ausreichend exakt sind und nicht statistischen Schwankungen unterliegen. Die Meßintervalle für die unterschiedlichen Abtastschwellwerte sollten daher entsprechend den unterschiedlichen Vergleichssummenwerten gewählt werden. Bei nur wenigen auftretenden Unterschieden werden die Meßintervalle vergrößert, während bei häufig auftretenden Unterschieden die Meßintervalle verkürzt werden

Die Auswertung der Verteilungsdichtekurven kann entsprechend dem bekannten Verfahren erfolgen. So ist es allgemein üblich, einen Signalqualitätsparameter Q zu berechnen aus:

$$Q = \frac{A}{\sigma_a + \sigma_b}$$

wobei A = b - a die Signalamplitude ist und $\sigma_a$ und $\sigma_b$ die Standardabweichungen bei einer angenommenen Gaußverteilung sind. Näheres kann der älteren Anmeldung DE 19 812 078.8 entnommen werden oder C. Glingener: "Modellierung und Simulation faseroptischer Netze mit Wellenlängenmultiplex"; WFT-Verlag, 1998, Seite 102 bis 118.

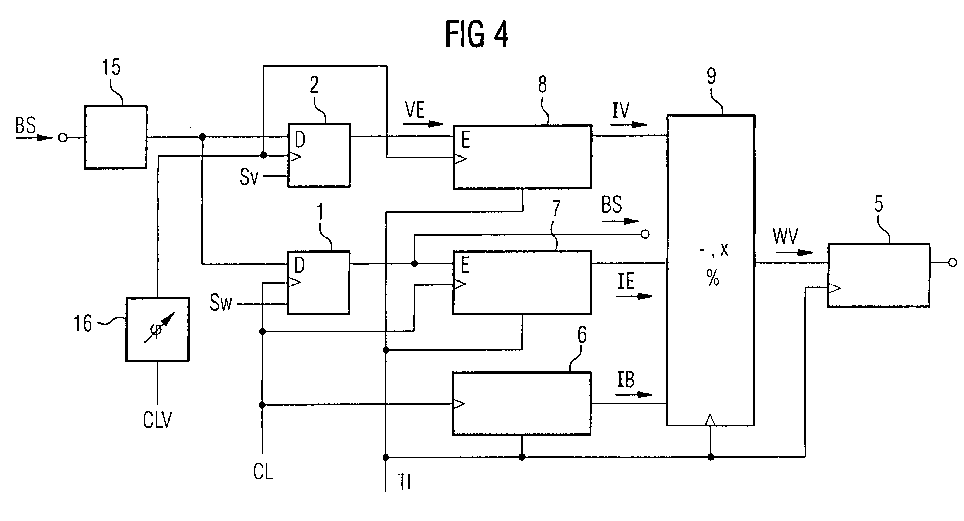

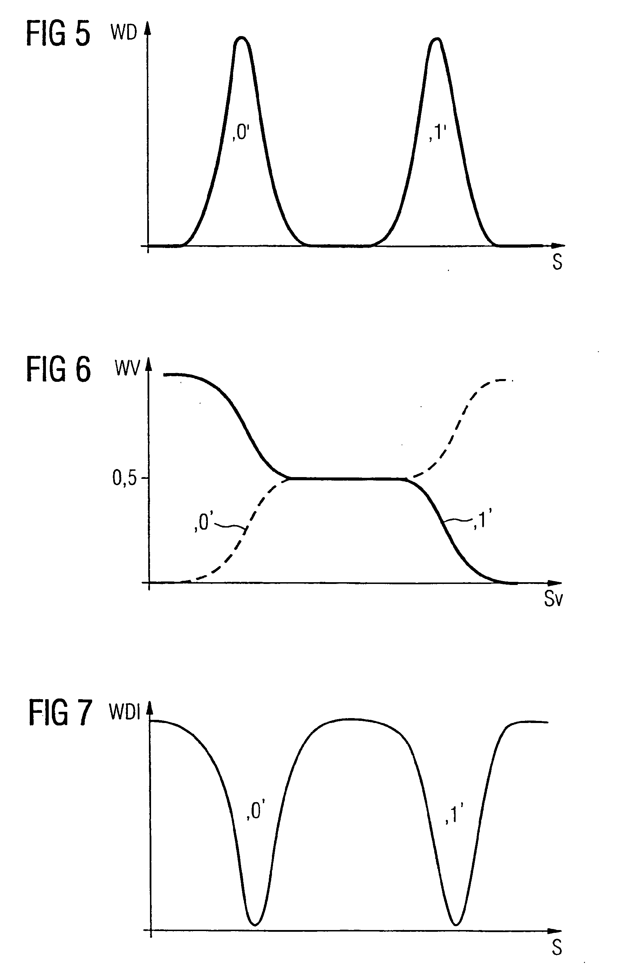

In **Figur 4** ist eine weitere besonders vorteilhafte Einrichtung zur Messung einer Wahrscheinlichkeitsverteilung dargestellt, aus der ebenfalls die Verteilungsdichte abgeleitet werden kann. Diese Schaltung enthält wieder zwei Abtaststufen 1 und 2, aber bis zu drei Zähler bzw. Integratoren 6, 7 und 8. Der erste Zähler 6 zählt die Anzahl IB der Bits während eines Meßintervalls, den Bitsummenwert. Der zweite Zähler 7 ist im Arbeitskanal an den Ausgang ist der Abtaststufe 1 angeschaltet und zählt die Anzahl der logischen Einsen, die mit zweiter Summenwert IE bezeichnet werden, während eines Meßintervalls. Der dritte Zähler 8 ist im Meßkanal an den Ausgang der zweiten Abtaststufe 2 angeschaltet und zählt bei unterschiedlichen Schwellwerten Sv ebenfalls die Anzahl IV mit logisch Eins bewerteten Bits VE, den ersten Summenwert IV. Die Summenwerte IB, IE und IV werden am Ende eines Meßintervalls einer Zwischenverarbeitungseinrichtung 9 zugeführt, in der die Normierung stattfindet oder zunächst in Speicher eingeschrieben und später normiert und verarbeitet. Danach wird der Meßvorgang mit einer veränderten Abtastschwelle wiederholt, bis die in **Figur 6** dargestellte Wahrscheinlichkeitsverteilung WV(S) ermittelt werden kann.

Geht man zunächst von einer Gleichverteilung von logischen Einsen und Nullen des Binärsignals BS aus, dann würde man bei einer Auswertung der Abtastwerte die in **Figur 5** dargestellte Wahrscheinlichkeitsdichte WD(S) erhalten.

Mit der Meßeinrichtung nach **Figur 4** wird jedoch die Wahrscheinlichkeit für das Auftreten eines bestimmten Binärzustandes gemessen. Wird nun mit einem so niedrigen Schwellwerte begonnen, daß im Meßkanal alle empfangenen Signalwerte oberhalb der Schwelle liegen und deshalb als logische Eins gewertet werden, so wird eine größtmögliche Wahrscheinlichkeit ermittelt. Wird dann der Schwellwert von Meßintervall zu Meßintervall erhöht, so wird sich die Wahrscheinlichkeit zunächst stetig reduzieren bis sie bei einem mittleren Schwellwert - eine Gleichverteilung von logischen Nullen und Einsen vorausgesetzt - etwa bei 0,5 liegt, um dann weiter auf Null abzunehmen. Die Ermittlung der Bitanzahl während eines Meßintervalls dient zur Normierung der Meßergebnisse bei ungleich langen Meßintervallen. Für die Wahrscheinlichkeitsverteilung von logischen Nullen im Meßkanal würde man eine gestrichelt eingezeichnete komplementäre Verteilungsfunktion erhalten.

Entsprechend den bereits bei der Meßanordnung nach Figur 1 angeführten Zusammenhängen kann durch Differenzieren der Verteilungsfunktion nach Figur 6 und Betragsbildung eine Wahrscheinlichkeitsdichte WDI gemäß **Figur 7** ermittelt werden, die "invers" zur Verteilungsdichte der Abtastwerte des Signals ist (oder es wird die Wahrscheinlichkeitsdichtefunktion der logischen Nullen ermittelt bzw. dieses Problem durch Betragsbildung vermieden).

Bei der Meßanordnung ist es gleichgültig, ob das Auftreten von logischen Einsen oder logischen Nullen bewertet wird. Alternativ zur Zählung der Bits innerhalb eines Meßintervalls können auch beide Abtastwerte Null und Eins gezählt werden, da diese sich zur Gesamtzahl der empfangenen Bits ergänzen. Wenn eine Gleichverteilung von logischen Einsen und Nullen vorliegt, kann auch der die logischen Einsen summierende Zähler 7 entfallen. Der Zähler wird dagegen benötigt um den Einfluß einer Ungleichverteilung von Nullen und Einsen weitestgehend durch Quotientenbildung der Summenwerte im Meßkanal und im Arbeitskanal zu eliminieren.

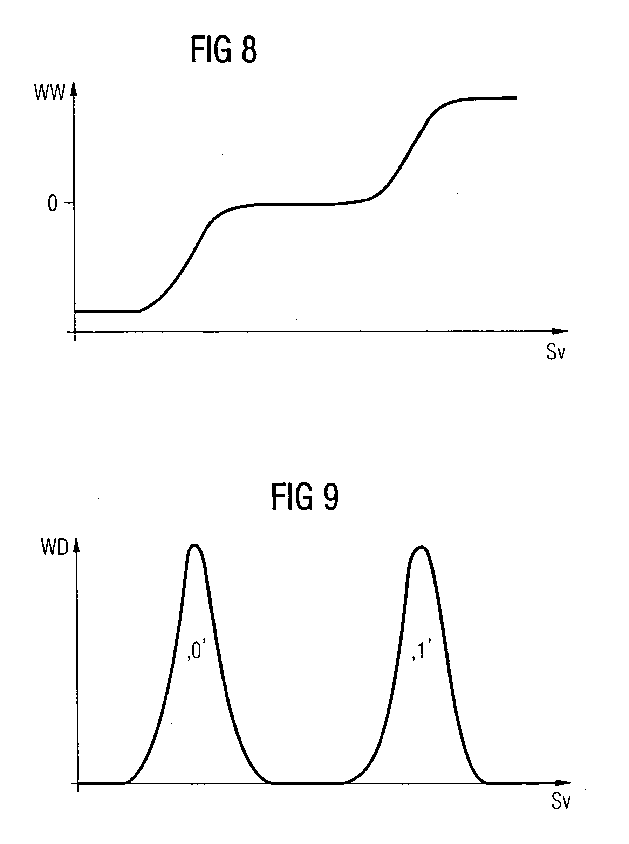

Entsprechend **Figur 8** kann auch die Differenz der Summenwerte IE - IV für einen Binärzustand, hier die logische Eins, für die erste Abtaststufe 1 und die Meß-Abtaststufe 2 ausgewertet. Diese Maßnahme wirkt etwa wie die in Figur 1 angegebene Schaltung: Es werden die Unterschiede zwischen Arbeits- und Meßkanal bewertet. Die Differenzbildung kann mit der Quotientenbildung kombiniert werden. Gegenüber Figur 6 ergibt sich eine waagerechte Verschiebung der Wahrscheinlichkeitsverteilungsfunktion WW. Aus der Wahrscheinlichkeitsfunktion kann ebenfalls wieder die in **Figur 9** dargestellte Wahrscheinlichkeitsdichteverteilung ermittelt werden, die für die Auswertung besonders geeignet ist. Da sich aber beide Funktionen mathematisch ineinander überführen lassen, ist grundsätzlich auch stets die Auswertung der Verteilungsfunktion möglich

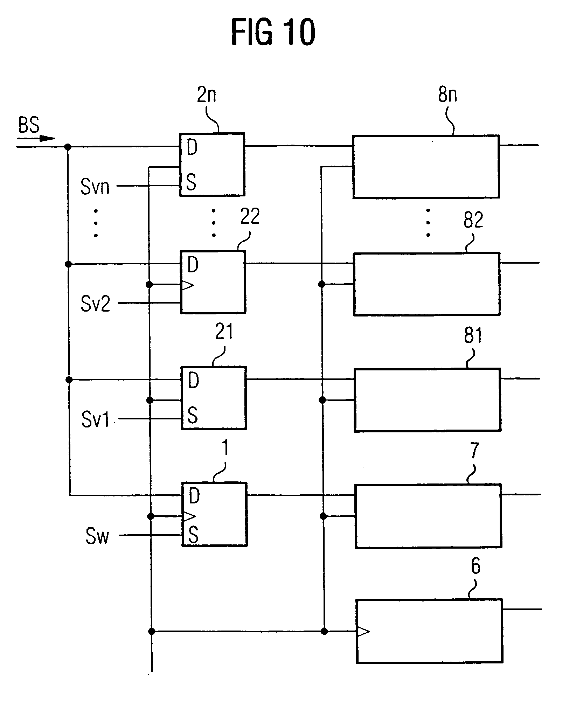

In **Figur 10** ist eine Meßeinrichtung dargestellt, mit der die insgesamt zum Erstellen einer Wahrscheinlichkeitsverteilung benötigte Meßzeit verkürzt werden kann. Ist nur eine Abtaststufe mit variabler Schwelle vorgesehen, so muß diese Schwelle nach jedem Meßintervall für eine neue Messung geändert werden. Werden dagegen mehrere Abtaststufen 21 bis 2n mit unterschiedlichen Schwellwerten Sv1 - Svn verwendet, dann können mehrere Messungen gleichzeitig durchgeführt und die Gesamtmeßzeit entsprechend verkürzt werden. Es ist nur ein geringer zusätzlicher Hardwareaufwand für die Abtastkippstufen und Integratoren 81 bis 8n erforderlich. Entsprechendes gilt auch für die Meßanordnung nach Figur 1. Aus Kostengründen ist Realisierung mit einer der Anzahl der notwendigen Schwellwerte entsprechenden großen Anzahl von Abtaststufen noch nicht wirtschaftlich. Dann wäre nur ein Meßintervall erforderlich.

Für weitere Meßzwecke auch eine Veränderung des Abtastzeitpunktes der Meß-Abtaststufe durch einen Phasenschieber 16 (Figur 4) vorgenommen werden, dem ein gegenüber dem regulärem Taktsignal Cl vorleilendes Taktsignal LV zugeführt wird. Wird diese Maßnahme zusätzlich durchgeführt, kann das gesamte Augendiagramm aufgrund statistischer Messungen erfaßt werden.

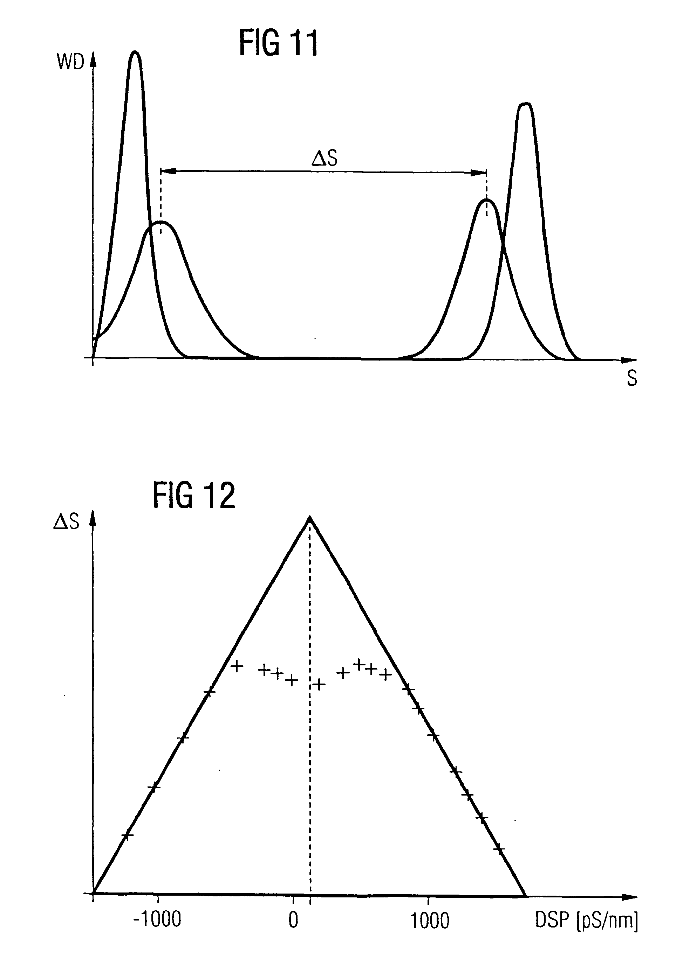

In **Figur 11** ist die Abhängigkeit der Verteilungsdichtefunktion bei unterschiedlichen Dispersionswerten dargestellt. Bei einer Dispersionsänderung verändert sich der Abstand der Maxima der Verteilungsdichtefunktion. Die Dispersion wird bei einer Installation oder Optimierung des Übertragungssystems - von einem Wert Null ausgehend - mit Hilfe eines in den Signalweg eingeschalteten einstellbaren Dispersionskompensators/Emulators 15 vergrößert oder verkleinert. Anschließend erfolgt jeweils die Messung der Wahrscheinlichkeitsverteilung und die Ermittlung des Abstandes ΔS zwischen den Maxima der Werte für Null und Eins. Bei größeren Abweichungen der Dispersion vom Optimum verringern sich die Abstände der Maxima für das Auftreten der den beiden binären Signalwerten zugeordneten Abtastwerte sowohl bei negativen als auch bei positiven Abweichungen der Dispersion. In Abhängigkeit von der in ps/nm (Picosekunden/Nanometer) angegebenen Dispersionsänderung sind auf der Ordinate die Abstände zwischen den Maxima der Verteilungsdichtefunktion in **Figur 12** angegeben. Durch Auswertung der Abstandsfunktion ΔS wird die Optimierung durchgeführt. Beispielsweise werden entsprechend Figur 12 die fallenden Flanken der Meßkurve verlängert; deren Schnittpunkt bestimmt die optimale Dispersion. Die Meßkurven werden wieder mit einer anordnungsgemäß Figur 1, 4 oder 10 gewonnen. Alternativ kann

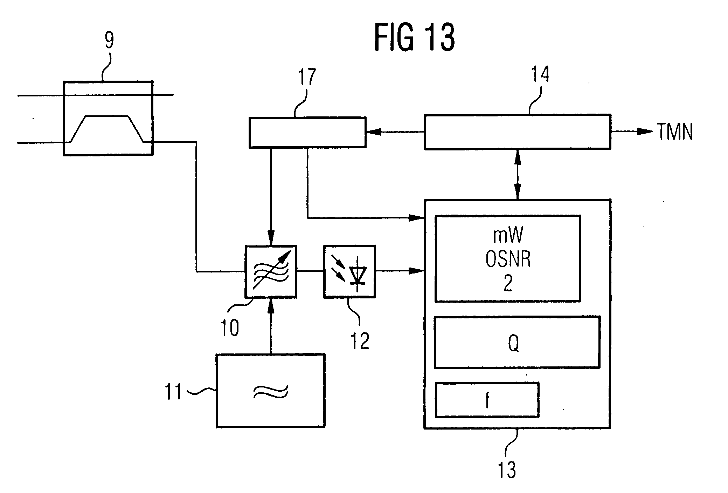

In **Figur 13** ist eine Meßanordnung für Wellenlängen-Multiplexsignale (WDM-Signale) dargestellt. Über einen optischen Koppler 9 wird ein Teil des Binärsignals abgezweigt und über ein abstimmbares Filter 10 und einen optoelektronischen Wandler 12 einer Meß- und Auswerteeinheit 13 als elektrisches Basisbandsignal zugeführt. Diese mißt die wichtigsten Kanalparameter, wie Kanalleistung, Wellenlänge, Rauschabstand führt außerdem, wie vorstehend beschrieben, statistische Messungen der Signalqualität durch, um beispielsweise Aussagen über die Bitfehlerrate treffen zu können, die an ein Managementsystem TMN übermittelt werden.

Die wesentlicher Teil der Meßvorrichtung ist ein optischer Spektrumanalysator, mit dem wesentliche Eigenschaften wie Pegel, Wellenlänge und Rauschabstand bestimmt werden können. Das abstimmbare Filter wirkt als Multiplexeinrichtung, um die Messungen mit vertretbaren Aufwand durchführen zu können. Die Wellenlänge des abgestimmten Filters kann mit Hilfe einer Eichvorrichtung 11 ausreichend genau eingestellt werden.

Eine Steuerung 14 sorgt für die sukzessive Prüfung der einzelnen WDM-Kanäle mit Hilfe einer Kanalauswahlschaltung 17. Sie bestimmt die Art der Messung. Bei statistischen Messungen bestimmt sie auch die Dauer der Meßintervalle.

## Patentansprüche

1. Verfahren zur Messung einer Verteilungsfunktion zum Ermitteln der Signalqualität in optischen Übertragungssystemen, bei dem ein optisches Binärsignal in ein elektrisches Binärsignal (BS) umgesetzt wird, das in einem Arbeitskanal bei einem ersten Schwellwert (Sw) abgetastet wird und zusätzlich in einem Meßkanal bei einem zweiten Schwellwert (Sv) abgetastet wird, und dann die abgetasteten Bits verglichen und die daraus abgeleiteten Vergleichswerte (VD) integriert werden,
   **dadurch gekennzeichnet,**
   **daß** der zweite Schwellwert (Sv) von Meßintervall zu Meßintervall variiert und das elektrische Binärsignal (BS) im Meßkanal während mehrerer Meßintervalle jeweils mit einem variierten zweiten Schwellwert (Sv) abgetastet wird,
   **daß** für jedes Meßintervall durch Integration der Vergleichswerte (VD) ein Vergleichssummenwert (IW) ermittelt wird,
   **daß** die Vergleichssummenwerte (IW) gespeichert werden und
   **daß** nach einer ausreichenden Anzahl von Meßintervallen eine Verteilungsfunktion (V(s)) der Vergleichswerte (VD) als Funktion des variierten zweiten Schwellwertes (Sv) ermittelt wird.

2. Verfahren zur Messung einer Verteilungsfunktion zum Ermitteln der Signalqualität in optischen Übertragungssystemen, bei dem ein optisches Binärsignal in ein elektrisches Binärsignal (BS) umgesetzt wird, das in einem Arbeitskanal mit einem ersten Schwellwert (Sw) abgetastet wird und in einem Meßkanal mit einem zweiten Schwellwert (Sv) abgetastet wird,
   **dadurch gekennzeichnet,**
   **daß** der zweite Schwellwert (Sv) von Meßintervall zu Messintervall variiert und das elektrische Binärsignal (BS) im Meßkanal während mehrerer Meßintervalle jeweils mit einem variierten zweiten Schwellwert (Sv) abgetastet wird,
   **daß** für jedes Meßintervall im Meßkanal durch Integration der abgetasteten logischen Nullen oder Einsen ein erster Summenwert (IV) ermittelt wird,
   **daß** die ersten Summenwerte (IV) gespeichert werden,
   **daß** für jedes Meßintervall die Anzahl der empfangenen Bits als Bitsummenwert (IB) ermittelt wird,
   **daß** die Bitsummenwerte (IB) gespeichert werden und
   **daß** nach einer ausreichenden Anzahl von Meßintervallen aus den gespeicherten ersten Summenwerten (IV) und zugeordneten Bitsummenwerten (IB) eine Wahrscheinlichkeitsverteilung (WV(Sv), WW(Sv)) für das Auftreten eines binären logischen Abtastwertes (0; 1) als Funktion des variierten zweiten Schwellwertes (Sv) ermittelt wird.

3. Verfahren nach Anspruch 2,
   **dadurch gekennzeichnet,**
   **daß** für jedes Meßintervall im Arbeitskanal durch Integration der empfangenen Nullen oder Einsen ein zweiter Summenwert (IE) ermittelt wird,
   **daß** die zweiten Summenwerte (IE) gespeichert werden und
   **daß** nach einer ausreichenden Anzahl von Messintervallen aus den gespeicherten ersten und zweiten Summenwerten (IV, IE) sowie den gespeicherten Bitsummenwerten (BS) die Wahrscheinlichkeitsverteilung (WV(Sv), WW(Sv)) für das Auftreten eines binären logischen Abtastwertes (0; 1)als Funktion des variierten zweiten Schwellwertes (Sv) ermittelt wird.

4. Verfahren nach Anspruch 3,
   **dadurch gekennzeichnet,**
   **daß** nach jedem Meßintervall die Differenz zwischen dem im Meßkanal ermittelten ersten Summenwert (IV) und den im Arbeitskanal ermittelten zweiten Summenwert (IE) gebildet wird,
   **daß** die Differenzwerte für die Meßintervalle zwischengespeichert werden und
   **daß** aus den Differenzwerten eine Wahrscheinlichkeitsfunktion WW(Sv) für das Auftreten der binären logischen Abtastwerte (0, 1) ermittelt wird.

5. Verfahren nach Anspruch 4,
   **dadurch gekennzeichnet,**
   **daß** eine Wahrscheinlichkeitsverteilung (WV) für das Auftreten der binären logischen Abtastwerte (0, 1) unter Berücksichtigung der zweiten Summenwerte (IE) im Arbeitskanal oder des Summenwertes (IB) der jeweils während eines Meßintervalls bewerteten Bits ermittelt wird.

6. Verfahren nach einem der vorhergehenden Ansprüche,
   **dadurch gekennzeichnet,**
   **daß** unterschiedlich lange Meßintervalle verwendet werden.

7. Verfahren nach einem der vorhergehenden Ansprüche,
   **dadurch gekennzeichnet,**
   **daß** eine synchrone Abtastung des Binärsignals (BS) durch mindestens ein Taktsignal (CL, CLV) erfolgt.

8. Verfahren nach einem der vorhergehenden Ansprüche,
**dadurch gekennzeichnet,**
**daß** die Abtastung parallel in mehreren Meßkanälen mit unterschiedlichen Schwellwerten (Sv1 bis Svn) erfolgt.

9. Verfahren nach Anspruch 8,
   **dadurch gekennzeichnet,**
   **daß** die Abtastung parallel in mehreren Meßkanälen mit unterschiedlichen Schwellwerten (Sv1 bis Svn) während eines Meßintervalls erfolgt.

10. Verfahren nach einem der vorhergehenden Ansprüche,
    **dadurch gekennzeichnet,**
    **daß** im Meßkanal der Abtastzeitpunkt nach jeweils einem Meßintervall geändert wird.

11. Verfahren nach einem der Ansprüche 1 bis 8,
    **dadurch gekennzeichnet,**
    **daß** Messungen der Wahrscheinlichkeitsverteilung (WV) mit unterschiedlich eingestellten Dispersionswerten erfolgen, **daß** die Meßergebnisse zwischengespeichert werden und
    **daß** daraus eine zumindest nahezu optimale Dispersionskompensation ermittelt wird.

12. Verfahren nach einem der Ansprüche 1 bis 11,
    **dadurch gekennzeichnet,**
    **daß** eine Wahrscheinlichkeitsdichteverteilung (P(S), WD(S), WDI(S)) für das Auftreten der binären logischen Abtastwerte (0; 1) ermittelt wird und daraus Kriterien für die Bewertung und/oder Optimierung der Signalqualität abgeleitet werden.

13. Anordnung zur Messung der Signalqualität von WDM-Signalen,
    **dadurch gekennzeichnet,**
    **daß** eine Kanalauswahlschaltung (10) vorgesehen ist, mit der jeweils ein WDM-Kanal ausgewählt wird,
    **dass** ein opoelektrischer Wandler (12) an den Ausgang der Kanalauswahlschaltung (10) angeschaltet ist, dem ein im ausgewählten WDM-Kanal übertragenes Binärsignals (BS) zugeführt wird,
    **dass** dem optoelektrischen Wandler (12) eine Meßeinrichtung (13) nachgeschaltet ist, der ein optisch-elektrisch gewandeltes Binärsignals (BS) zugeführt wird, und
    **daß** die Meßeinrichtung (13) ausgebildet ist, die Verteilungsfunktion entsprechend einem der Ansprüche 1 bis 11 und außerdem als wesentlichen Signalparameter zumindest den Rauschabstand des im ausgewählten WDM-Kanal übertragenen Binärsignals (BS) zu messen.

## Claims

1. Method for measuring a distribution function for determining the signal quality in optical transmission systems, in which an optical binary signal is converted into an electrical binary signal (BS) which is sampled in a working channel in the case of a first threshold value (Sw) and is additionally sampled in a measuring channel in the case of a second threshold value (Sv), and then the sampled bits are compared and the comparison values (VD) derived from this are integrated, **characterized in that** the second threshold value (Sv) varies from measuring interval to measuring interval and the electrical binary signal (BS) is sampled in the measuring channel during a plurality of measuring intervals, in each case with a varied second threshold value (Sv), **in that** for each measuring interval a summated comparison value (IW) is determined by integration of the comparison values (VD), **in that** the summated comparison values (IW) are stored and **in that**, after an adequate number of measuring intervals, a distribution function (V(s)) of the comparison values (VD) is determined as a function of the varied second threshold value (Sv).

2. Method for measuring a distribution function for determining the signal quality in optical transmission systems, in which an optical binary signal is converted into an electrical binary signal (BS) which is sampled in a working channel with a first threshold value (Sw) and is sampled in a measuring channel with a second threshold value (Sv), **characterized in that** the second threshold value (Sv) varies from measuring interval to measuring interval and the electrical binary signal (BS) is sampled in the measuring channel during a plurality of measuring intervals, in each case with a varied second threshold values (Sv), **in that**, for each measuring interval, a first summated value (IV) is determined in the measuring channel by integration of the sampled logical zeros or ones, **in that** the first summated values (IV) are stored, **in that**, for each measuring interval, the number of bits received is determined as a summated bit value (IB), **in that** the summated bit values (IB) are stored and **in that**, after an adequate number of measuring intervals, a probability distribution (WV(Sv), WW(Sv)) is determined as a function of the varied second threshold value (Sv) for the occurrence of a binary logical sampled value (0; 1) from the stored first summated values (IV) and associated summated bit values (IB).

3. Method according to Claim 2, **characterized in that**, for each measuring interval, a second summated value (IE) is determined in the working channel by integration of the received zeros or ones, **in that** the second summated values (IE) are stored and **in that**, after an adequate number of measuring intervals, the probability distribution (WV(Sv), WW(Sv)) is determined as a function of the varied second threshold value (Sv) for the occurrence of a binary logical sampled value (0; 1) from the stored first and second summated values (IV, IE) and the stored summated bit values (BS).

4. Method according to Claim 3, **characterized in that**, after each measuring interval, the difference between the first summated value (IV), determined in the measuring channel, and the second summated value (IE), determined in the working channel, is formed, **in that** the difference values for the measuring intervals are buffer-stored and **in that** a probability function WW(Sv) for the occurrence of the binary logical sampled values (0,1) is determined from the difference values.

5. Method according to Claim 4, **characterized in that** a probability distribution (WV) for the occurrence of the binary logical sampled values (0,1) is determined, taking into account the second summated values (IE) in the working channel or the summated value (IB) of the bits respectively assessed during a measuring interval.

6. Method according to one of the preceding claims, **characterized in that** measuring intervals of different lengths are used.

7. Method according to one of the preceding claims, **characterized in that** a synchronous sampling of the binary signal (BS) takes place by at least one clock signal (CL, CLV).

8. Method according to one of the preceding claims, **characterized in that** the sampling takes place in parallel in a plurality of measuring channels with different threshold values (Sv1 to Svn).

9. Method according to Claim 8, **characterized in that** the sampling takes place in parallel in a plurality of measuring channels with different threshold values (Sv1 to Svn) during one measuring interval.

10. Method according to one of the preceding claims, **characterized in that** in the measuring channel the sampling instant is changed after each measuring interval.

11. Method according to one of Claims 1 to 8, **characterized in that** the measurements of the probability distribution (WV) take place with differently set dispersion values, **in that** the measurement results are buffer-stored and **in that** an at least approximately optimum dispersion compensation is determined from them.

**12.** Method according to one of Claims 1 to 11, **characterized in that** a probability density distribution (P(S), WD(S), WDI(S)) for the occurrence of the binary logical sampled values (0; 1) is determined and criteria for the assessment and/or optimization of the signal quality are derived from it.

**13.** Arrangement for measuring the signal quality of WDM signals, **characterized in that** a channel selection circuit (10) is provided, with which a WDM channel is in each case selected, **in that** an optoelectrical converter (12) is connected to the output of the channel selection circuit (10), to which converter a binary signal (BS) transmitted in the selected WDM channel is fed, **in that** a measuring device (13) is connected downstream of the optoelectrical converter (12), to which measuring device an optically/electrically converted binary signal (BS) is fed, and **in that** the measuring device (13) is designed to measure the distribution function in a way corresponding to one of Claims 1 to 11 and furthermore at least the signal-to-noise ratio of the binary signal (BS) transmitted in the selected WDM channel as the main signal parameter.

**Revendications**

**1.** Procédé de mesure d'une fonction de distribution pour déterminer la qualité d'un signal dans des systèmes de transmission optique, dans lequel on convertit un signal binaire optique en signal binaire électrique (BS) que l'on échantillonne dans un canal de travail avec une première valeur seuil (Sw) et également dans un canal de mesure avec une deuxième valeur seuil (Sv), puis on compare les bits échantillonnés et on intègre les valeurs de référence (VD) déduites,

**caractérisé en ce que**

la deuxième valeur seuil (Sv) varie d'intervalle de mesure en intervalle de mesure et on échantillonne le signal binaire électrique (BS) dans le canal de mesure pendant plusieurs intervalles de mesure, à chaque fois avec une deuxième valeur seuil variée (Sv), on détermine pour chaque intervalle de mesure, par intégration des valeurs de référence (VD), une valeur cumulée de référence (IW),

on met en mémoire les valeurs cumulées de référence (IW) et

on détermine après un nombre suffisant d'intervalles de mesure une fonction de distribution (V(s)) des valeurs de référence (VD) comme fonction de la deuxième valeur seuil variée (Sv).

**2.** Procédé de mesure d'une fonction de distribution pour déterminer la qualité d'un signal dans des systèmes de transmission optique, dans lequel on convertit un signal binaire optique en signal binaire électrique (BS) que l'on échantillonne dans un canal de travail avec une première valeur seuil (Sw) et dans un canal de mesure avec une deuxième valeur seuil (Sv),

**caractérisé en ce que**

la deuxième valeur seuil (Sv) varie d'intervalle de mesure en intervalle de mesure et on échantillonne le signal binaire électrique (BS) dans le canal de mesure pendant plusieurs intervalles de mesure, à chaque fois avec une deuxième valeur seuil variée (Sv), on détermine pour chaque intervalle de mesure dans le canal de mesure, par intégration des zéros ou uns logiques échantillonnés, une première valeur cumulée (IV),

on met en mémoire les premières valeurs cumulées (IV),

on détermine pour chaque intervalle de mesure le nombre de bits reçus comme valeur cumulée de bits (IB),

on met en mémoire les valeurs cumulées de bits (IB) et

on détermine après un nombre suffisant d'intervalles de mesure, à partir des premières valeurs cumulées (IV) mémorisées et des valeurs cumulées de bits (IB) associées, une distribution de probabilité (WV(Sv), WW(Sv)) de l'apparition d'une valeur d'échantillonnage logique binaire (0 ; 1) comme fonction de la deuxième valeur seuil variée (Sv).

**3.** Procédé selon la revendication 2,
**caractérisé en ce que**
on détermine pour chaque intervalle de mesure dans le canal de travail, par intégration des zéros ou uns reçus, une deuxième valeur cumulée (IE),
on met en mémoire les deuxièmes valeurs cumulées (IE) et
on détermine après un nombre suffisant d'intervalles de mesure, à partir des premières et deuxièmes valeurs cumulées (IV, IE) mémorisées et des valeurs cumulées de bits (BS) mémorisées, la distribution de probabilité (WV(Sv), WW(Sv)) de l'apparition d'une valeur d'échantillonnage logique binaire (0 ; 1) comme fonction de la deuxième valeur seuil variée (Sv).

**4.** Procédé selon la revendication 3,
**caractérisé en ce que**
on établit après chaque intervalle de mesure la différence entre la première valeur cumulée (IV) déterminée dans le canal de mesure et la deuxième valeur cumulée (IE) déterminée dans le canal de travail,
on met en mémoire intermédiaire les valeurs différentielles pour les intervalles de mesure et
on détermine à partir des valeurs différentielles une fonction de probabilité WW(Sv) de l'apparition des valeurs d'échantillonnage logiques binaires (0, 1).

**5.** Procédé selon la revendication 4,

**caractérisé en ce que**

on détermine une distribution de probabilité (WV) de l'apparition des valeurs d'échantillonnage logiques binaires (0, 1) en tenant compte des deuxièmes valeurs cumulées (IE) dans le canal de travail ou de la valeur cumulée (IB) des bits estimés à chaque fois pendant un intervalle de mesure.

6. Procédé selon l'une des revendications précédentes,

   **caractérisé en ce que**

   on utilise des intervalles de mesure de durée différente.

7. Procédé selon l'une des revendications précédentes,

   **caractérisé en ce que**

   un échantillonnage synchrone du signal binaire (BS) par au moins un signal d'horloge (CL, CLV) est effectué.

8. Procédé selon l'une des revendications précédentes,

   **caractérisé en ce que**

   l'échantillonnage est effectué en parallèle dans plusieurs canaux de mesure avec des valeurs seuils différentes (Sv1 à Svn).

9. Procédé selon la revendication 8,

   **caractérisé en ce que**

   l'échantillonnage est effectué en parallèle dans plusieurs canaux de mesure avec des valeurs seuils différentes (Sv1 à Svn) pendant un intervalle de mesure.

10. Procédé selon l'une des revendications précédentes,

    **caractérisé en ce que**

    on change dans le canal de mesure l'instant d'échantillonnage, à chaque fois après un intervalle de mesure.

11. Procédé selon l'une des revendications 1 à 8,

    **caractérisé en ce que**

    on effectue les mesures de la distribution de probabilité (WV) avec des valeurs de dispersion ajustées différemment,

    on met en mémoire intermédiaire les résultats de mesure et

    on en détermine une compensation de dispersion au moins presque optimale.

12. Procédé selon l'une des revendications 1 à 11,

    **caractérisé en ce que**

    on détermine une distribution de densité de probabilité (P(S), WD(S), WDI(S)) de l'apparition des valeurs d'échantillonnage logiques binaires (0 ; 1) et on en déduit des critères pour l'estimation et/ou l'optimisation de la qualité du signal.

13. Dispositif de mesure de la qualité de signal de signaux WDM,

    **caractérisé en ce que**

    il est prévu un circuit de sélection de canal (10) permettant de sélectionner à chaque fois un canal WDM,

    **en ce qu'**un convertisseur optoélectronique (12) est branché sur la sortie du circuit de sélection de canal (10), auquel est amené un signal binaire (BS) transmis dans le canal WDM sélectionné,

    **en ce qu'**un dispositif de mesure (13) est monté en aval du convertisseur optoélectronique (12), auquel est amené un signal binaire (BS) converti optoélectriquement et

    **en ce que** le dispositif de mesure (13) est conçu pour mesurer la fonction de distribution conformément à l'une des revendications 1 à 11 et pour mesurer également, comme paramètre essentiel de signal, au moins le rapport signal/bruit du signal binaire (BS) transmis dans le canal WDM sélectionné.

# FIG 1

EP 1 166 487 B1

# FIG 2

# FIG 3

# FIG 4

EP 1 166 487 B1

FIG 5 WD

,0'    ,1'

S

FIG 6 WV

0,5

,0'    ,1'

Sv

FIG 7 WDI

,0'    ,1'

S

## FIG 8

## FIG 9

# FIG 10

# FIG 11

# FIG 12

## FIG 13

EP 1 166 487 B1